# EUROPEAN PATENT SPECIFICATION

(11) **EP 0 647 577 B1**
(45) Date of publication and mention of the grant of the patent: **07.04.1999**
(21) Application number: 94116019.4
(22) Date of filing: 11.10.1994
(51) Int. Cl.: B65G 33/34, F16H 25/24

(54) **Continuous helical gear for conveying and storing suspended objects**
Endlose Förder- und Lagerschnecke für hängende Gegenstände
Vis sans fin pour convoyer et supporter des objets suspendus

(30) Priority: 11.10.1993 IT MO930126
(43) Date of publication of application: 12.04.1995
(73) Proprietor: Cini, Claudio, I-41012 Carpi (MO) (IT); Silipo, Margherita, I-41012 Carpi (MO) (IT); ISTRIA S.R.L., I-41012 Carpi (MO) (IT)
(72) Inventor: Cini, Claudio, I-41012 Carpi (IT)
(74) Representative: Gislon, Gabriele

(56) References cited:
- DE-A- 4 205 456
- DE-B- 1 214 611
- FR-A- 1 336 170
- FR-A- 1 434 521
- US-A- 2 620 917
- US-A- 4 395 924

## Description

The invention concerns a continuous helical gear conveyor for conveying and storing suspended objects, that is, a device that, whilst keeping the objects suspended, conveys them or keeps them in storage by means of a helical gear and is particularly suitable for suspended confections.

The prior art involves helical gear devices, both for just conveying the suspended items and for conveying and supporting the suspended items, of limited lengths and with devices to prevent the operator's fingers and hair from getting caught in the mechanism.

Prior art, also, involves in the patent DE 1214611 helical gear devices with curved stretches of limited length and short curvature radius. The flexible stretches are made by one internal spiralform spring with many starts and one external wound in opposite direction. The internal spring is rigidly connected to the helical gear at each ends and the external one is the same wound in the rigid helical gear stretches before and after flexible stretch.

As result the kown type of flexible helical gear do not work well to high turn speed: the objects are twisted rapidly from the two straight stretches and may oscillate to drop from the helical gear. The mechanical charge of its own weight and of weight of objects do not permit to made long curved path, so the only curve permitted is with short curvature radius and thus short length of the curved path.

Such prior art may be subject to considerable improvements with a view to eliminating the limitation on the length of the flexible helical gear, thereby making it possible for it to extend distance from the two straight stretches with also long curvature radius.

From the foregoing emerges the need to solve the technical problem of finding a flexible helical gear that may follow whichever path that may be required, subsequently, a conformation of flexible helical gear stretches with low weight and, furthermore, helical gear that may be easly dismantled and motorized.

One solution to this problem is disclosed in US 2620917 where the curved stretches of a flexible helical gear are supported in their entirety by outer bearings.

This invention follows a different way and solves the said technical problem by adopting: a continuous helical gear conveyor for conveying and storing suspended objects with one flexible helical gear stretch at least, comprising a rotating helical gear that contains in the space between the thread and supports a hook of the object being conveyed, and for flexible stretches two axially coupled helixes, the external one with a pitch sufficient to contain and push along the hook of the objects being conveyed and the internal one, wound in the opposite direction and with external diameter close to the internal diameter of the first one, that provides support for the said hook and resistance against compression for the external helix, characterized in that the flexible helical gear is guided by an internal core forming the curvature/s required in the individual applications: the said core is completely enclosed by the flexible helical gear, but is positioned in space by means of the contact of the flexible helical gear with its supports.

In a preferred embodiment: said flexible helical gear is advantageously obtained with the provision of a helical groove, wound in the opposite direction to the external thread of the helical gear, cut to a diameter which is greater than the minor diameter of the external thread in the tubular section included between the said minor diameter and the diameter of the internal hole.

In a further preferred embodiment: said internal core, due to the sliding contact to the internal hole, is advantageously covered with a layer of low-friction material.

In another embodiment: each stretch of helical gear is connected to the adjoining stretch in a fixed manner or so that it may be dismantled by means of toothed end joints.

In a further embodiment: the helical gear having, furthermore, rigid end joint with a tooth for each start and a helical contact surface obtained on the centre line of the thread.

In a further embodiment: the helical gear having an end joint that may be dismantled with a tooth for each start and a helical contact surface obtained on the centre line of the base of the thread.

In a further embodiment: the said stretch of flexible helical gear is connected at its ends to the continuous helical gear with rigid joints and in the proximity of its motorized supports.

In a further embodiment: the flexible helical gear has a pitch of the helical groove of between 1/100 and 2/3 of the pitch of the external thread; a ratio between hole diameter and core diameter of between 1/2 and 9/10.

In a further embodiment: the axial positioning of the helical gear is achieved by means of curved lip of the cradle, or support, coupled to the corresponding spline of the thread of the continuous helical gear.

In a further embodiment: the axial positioning is achieved by means axial references positioned between the thread and teeth making contact with the internal edges of cradle sections or support.

In a further embodiment: the axial positioning of the helical gear is achieved by means of the coupling of lugs positioned on top of teeth of the length of toothed helical gear with corresponding notches in the base of spaces on the corresponding toothed length of continuous helical gear.

In a further embodiment: the axial positioning is achieved by means of ridges on the crest of the thread extending beyond the external diameter of the helical gear, which make contact with the external extremities of the cradle/s or support/s.

The advantages offered by the invention are: the helical gear, having a number of motorized supports can extend an indefinite distance, it being possible to drive each stretch so that they are synchronized, each stretch being structurally independent of one another but adjoining so as to form an uninterrupted helical gear; the flexible helical gear enables the objects being conveyed to be moved along paths having variations in direction and/or elevation so that they may be positioned at any point in space; the transmission can be achieved in differing ways; with a cog belt the hook slides over its reverse side, crossing over it and continuing on its way, this being suitable for suspended items such as articles of clothing; the transmission with the toothed thread, with the teeth either extending beyond or cut into the thread, enables high torques to be transmitted and is, therefore, suitable for objects of various weights and nature, not limiting its use just for suspended articles of clothing; finally, the indefinite length of the helical gear conveyor, even made up of adjoining and synchronized stretches, enables the provision of gravity loading and unloading stations, with static stretches of tube or smooth rail, thereby preventing the personnel from getting close to the rotating helical gear and, therefore, the possible consequences in terms of accidents.

Some embodiments of the invention are illustrated, by way of example in the six tables of drawings attached, in which
Figure 1 is the plan view of a stretch of helical gear, as described, including the support with cog belt drive;
Figure 2 is section II-II of Figure 1;
Figure 3 is a view of just the helical gear, partially sectioned and including the toothed section;
Figure 4 is the view of two ends of the helical gear facing each other ready to be coupled;
Figure 5 is an axial view of the said ends of the helical screw;
Figure 6 is a front view of the structure of the drive support;
Figure 7 is transverse section of an orthogonally adjustable intermediate support without drive and with the helical gear that may be dismantled for maintenance;
Figure 8 is a plan view of a stretch of continuous helical gear between two supports with drives;
Figure 9 is a partially sectioned view of the flexible helical gear in a further embodiment of the present invention;
Figure 10 is a curved stretch of the said flexible helical gear;
Figure 11 is the side view of two dismantled stretches of helical gear;

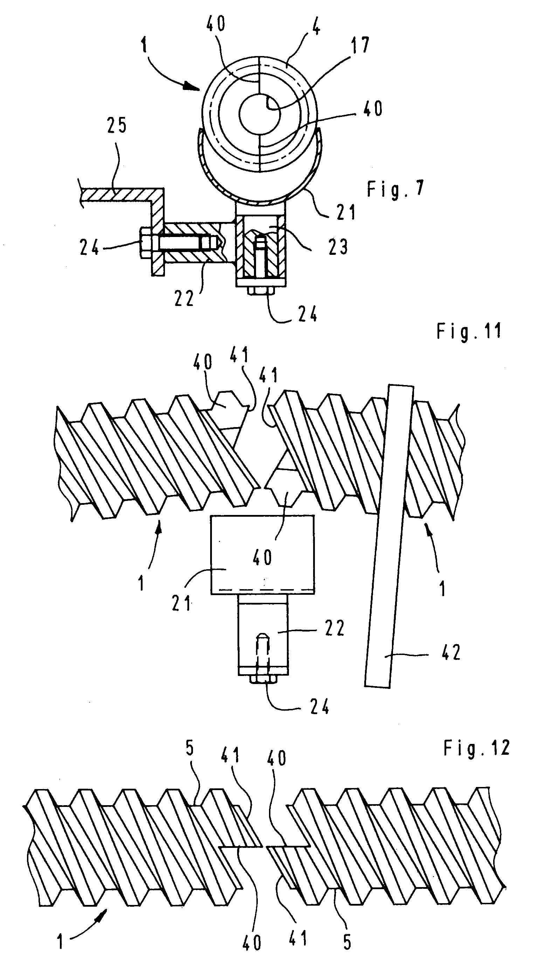

Figure 12 is the top view of the same stretches of helical gear;
Figure 13 is the transverse section of the support with drive for the helical gear with teeth extending beyond the external diameter of helical gear itself;
Figure 14 is the section on vertical, axial plane XIV-XIV of Figure 13;
Figure 15 is the transverse section of the support with drive for the helical gear with teeth contained within the height of the thread of the helical gear;
Figure 16 is the section on vertical, axial plane XVI-XVI of Figure 15 with the rotation transmitted through a bevel gear.

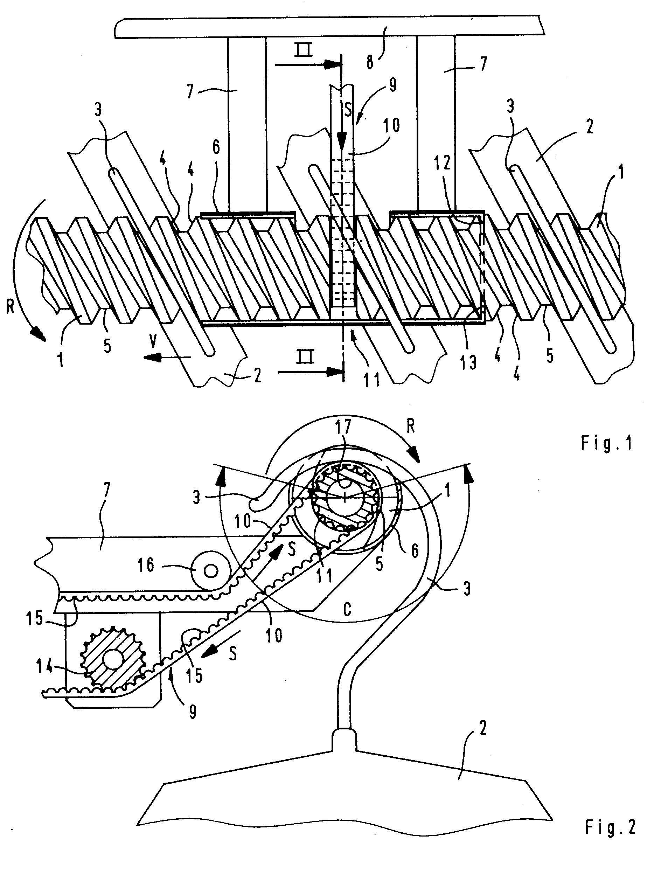

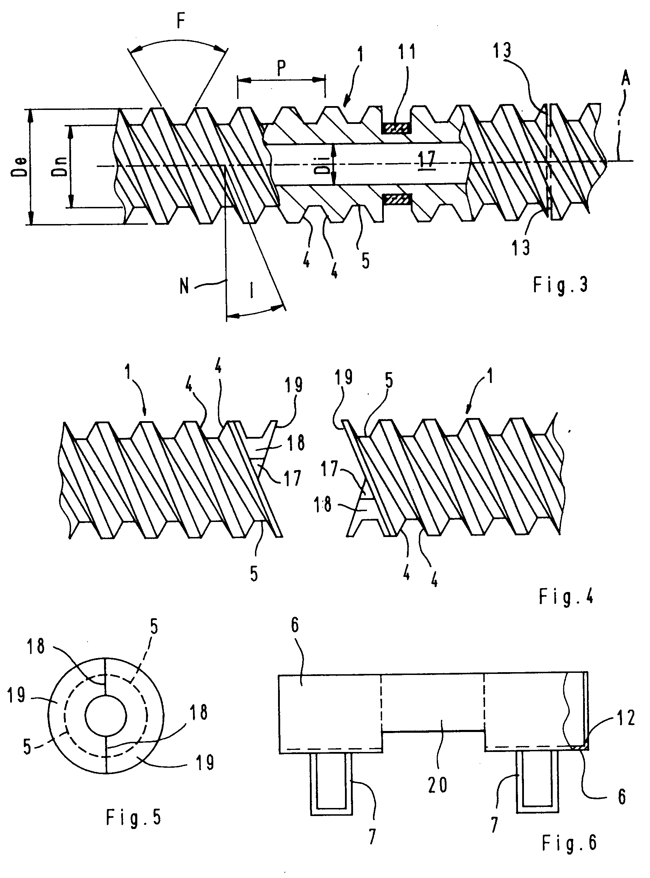

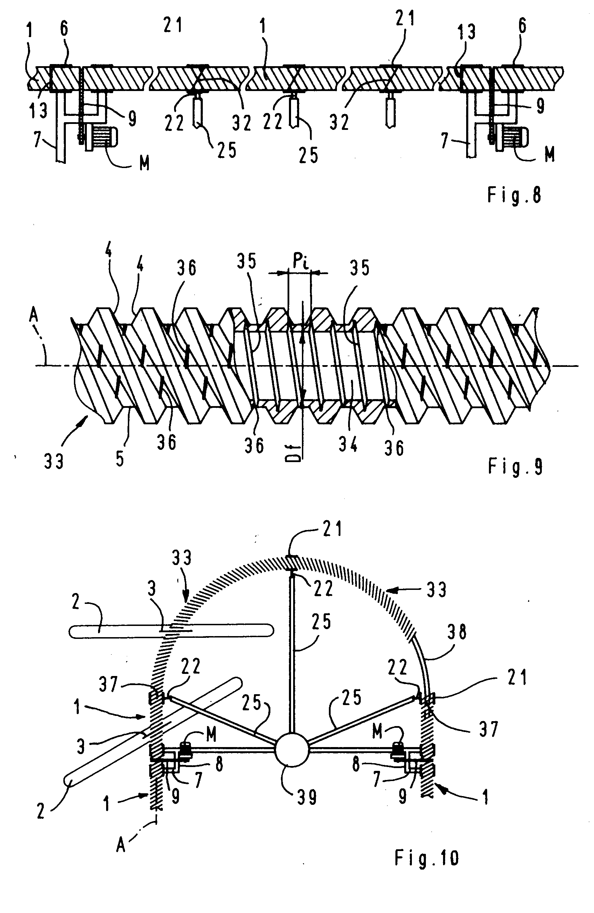

The figures show: 1, Figure 1, the double-start helical gear; 2, the hanger with hook 3, moved along by flanks 4 of the thread and supported on base 5; 6, the supporting and guiding cradle for the helical gear,with brackets 7 joining it to fixed structure 8; 9, the cog belt on whose reverse side 10 slides hook 3 across the toothed section 11 acting as cogwheel; S, the direction in which the cog belt moves; R, the rotation of the helical gear 1; V, the direction in which the hanger 2 is conveyed; 12, a curved lip of cradle 6, coupled to spline 13 of the helical gear for axial positioning; 14, Figure 2, a cogwheel acting on internal toothed face 15 of belt 9; 16, an idler wheel acting on reverse side 10 of the belt; 17, an axial hole in the helical gear; C, the included angle of the cradle of the helical gear; F, Figure 3, the angle between the flanks of the thread and I, the lead angle from plane N perpendicular to axis A of helical gear 1; P, the pitch that includes two spaces; Dn and De, respectively, the core diameter and the external diameter; Di, the internal diameter of the hole 17; 18, Figure 4, the face of the front tooth of the end joint of a stretch of helical gear, for the extension and/or rigid coupling by glueing, on helical surfaces 19, with the following stretch of helical gear: the helical surfaces are obtained on the centre lines of the threads; 20, Figure 6, a length of cradle 6 with reduced including angle for the passage of belt 9; 21, Figure 7, a length of cradle 6, adjustable by means of joint 22, connected to it by means of vertical coupling pin 23 and bolts 24 to fix it to the supporting structure 25.

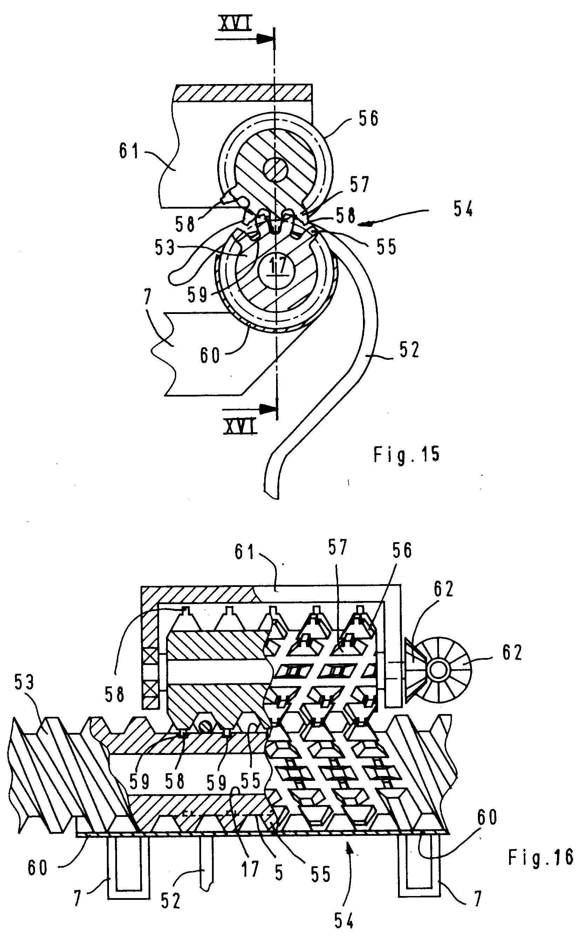

The figures also show: M, Figure 8, the motor reducer driving the belt; 32, a two tooth end joint for dismantling helical gear 1 to allow the maintenance or substitution of the belts; 33, Figure 9, the flexible helical gear with the same external dimensions of helical gear 1, but with internal axial hole of diameter Df, in which a helical groove 35 is cut, wound in the opposite direction of the external thread of the helical gear, and having a different pitch Pi: the depth of groove 35 extends to a diameter that is greater than core diameter Dn so that, where the groove intersects base 5 of the thread slits 36 are created whose width are able to compensate for the longer or shorter lengths of the extrados and the intrados during flexure; 37, Figure 10, the rigid joint between helical gear 1 and flexible helical gear 33; 38, an internal guiding core for the flexible helical gear 33 whose external diameter is conveniently smaller than diameter Df and which extends between joints 37; 39, a support column for structures 8 and 25; 40, Figure 7, the face of the front tooth of the end joint of a stretch of helical gear, for coupling and uncoupling stretches of helical gear 1; 41, Figure 11, the helical surfaces obtained on the centre line of the bases 5 of the threads; 42, the cog belt 9 ready to be substituted.

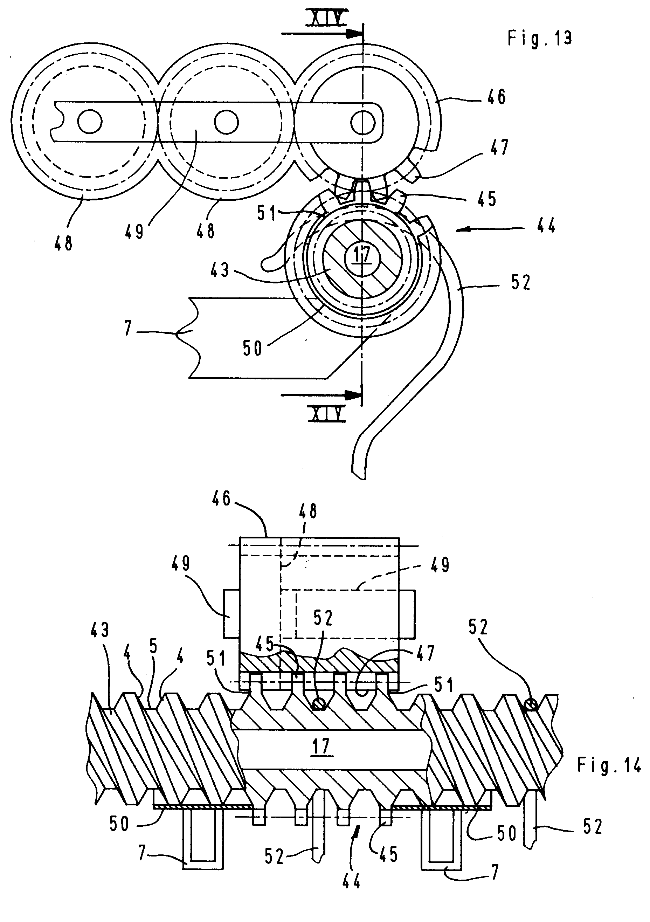

The figures also show: 43, Figure 13, the conveyor and storage helical gear in a further embodiment, which has a toothed section 44, located in relation to the support with drive, with teeth 45 that extend outward from the external diameter of the helical gear; 46, a cylindrical gear wheel whose teeth 47 engage with teeth 45 of the helical gear; 48, a train of gear wheels with analogous teeth and constituting the transmission from a motor reducer; 49, the arm supporting the said gear wheels 46 and 48; 50, the lengths of cradle either side of toothed section 44 of helical gear 43, in contact with the internal edges at the axial references 51 positioned between the thread and the teeth; 52, the carrying hook for the objects supported on base 5 and moved along by flanks 4 of the thread also when crossing the toothed section 44; 53, Figure 15, the conveyor and storage helical gear in a further embodiment, having toothed section 54 located at the support with drive, which has teeth 55 contained in the height of the thread itself; 56, a corresponding length of toothed helical gear of limited length, positioned vertically with axis parallel to helical gear 53: the said length of helical gear 56 must be sized identically, but with mirror image thread and teeth 57 in relation to helical gear 53; 58, lugs positioned, beyond the external diameter of length of helical gear 56, on the top of teeth 57, lugs which fit into corresponding niches 59 in the bases of the spaces of the toothed section 54 of the helical gear 53, constituting an axial positioning references; 60, the supporting cradle of the toothed helical gear 53; 61, the support structure for the transmission and the length of toothed helical gear 56; 62, a pair of bevel gears for the said transmission.

The continuous helical gear 1, suitable for suspended confections, is advantageously sized with a right-handed, double-start thread, pitch P=20 mm, external diameter De=28 mm, core diameter Dn=20 mm, angle F=60°, lead angle I=20°44′ and internal diameter Di=10 mm; with the flexible helical gear 33 the internal hole has a diameter Df=16 mm, and groove 35 is a single-start, left-hand helix with pitch Pi=5 mm.

Operation of the continuous helical gear is as follows: in the case where suspended confections are conveyed and stored, hanger 2, suspended from hook 3, made to slide on base 5 and against flanks 4 of the thread, is conveyed V along helical gear 1 by the rotation R of the same, until it reaches the support with drive where the helical gear is supported by cradle 6 where the toothed section 11 is located that couples with cog belt 9; the dimension of reverse side 10 of the belt approaches that of core diameter Dn of the thread, the hook therefore slides, pushed by the thread preceding the toothed section 11, over the reverse side of the belt, being then taken up by the flank of the thread following the said toothed section and continuing its progress V along continuous helical gear 1; the axial thrust that arises, by reaction, from the displacement of the articles is absorbed by the curved lip 12 of cradle 6 acting on the corresponding spline 13 of helical gear 1. Furthermore, hook 3 is able to cross the supports as the included angle C of the cradles of the helical gear is greater than 180° and less than the angle of interference with hook 3 within the external diameter De of the helical gear, with the sizing adopted this angle is advantageously 210°.

With operation as described above there are a number of points of contact with reciprocal sliding between the parts: between the hook 3 and the base 5; between the hook 3 and the reverse side 10 of the belt; between the external diameter De of the thread and the cradle 6; also between curved lip 12 and spline 13 of the helical gear 1; between the flexible helical gear 33 and the guiding core 38; the continuous conveying and storing helical gear, therefore, operates much better if in each of the mentioned points of sliding contact for at least one of the surfaces in contact low-friction material is used: the helical gear 1 or 33 can be made of nylon or similar plastic material such as teflon; the reverse side 10 of the belt can be covered with similar material; the cradle 6 and the curved lip can, advantageously be made from sheet stainless steel; the core 38 is advantageously covered with a layer of plastic low friction material.
The belt 9 is advantageously driven by a motor reducer, not shown, by means of a transmission with deflected belt with deviator wheels 14 and 16 in order to limit the overall dimensions of the same: the gear wheel 14 can also be a driving wheel, coupled to the said motor reducer: the various motor reducers are coupled to synchronous electric motors so as keep a constant rotation in the different stretches of the transporting and storing device.

A generic stretch of continuous helical gear, as illustrated in Figure 8, consists of, between supports with belt drives, intermediate supports at which there are end joints for transmitting rotation to stretches that are not driven: said stretches can be rigidly connected to the driven stretches or simply connected with end joints 40 that can be dismantled, conveniently limited to helical surfaces 41 of the centre line of the base 5; dismantling is possible due to the clearance necessarily present that enables the helical gear to be taken out of the cradles in the stretch that is to be dismantled (Figures 7 and 11). The rigid end joint, suitable for glueing, has teeth 18 and the helical surfaces 19 positioned on the centre line of the thread (Figures 4 and 5). The intermediate supports of the continuous helical gear (Figures 7 and 8) are positioned at intervals in order to limit flexure of the helical gear under the weight of the objects being conveyed or that are stationary on it: cradle 21 being adjustable, by means of joint 22, enables imprecision in the construction of the structure holding the supports to be compensated for.

The flexible helical gear 33 is made flexible by the combined action of the two spirals: the first being that of the external double-start thread, the second being that defined by the material included between the core diameter Dn and the diameter of the hole Df; this material being cut by helical groove 35, wound in the opposite direction and with dimensions not coinciding with that of the external thread, and constituting its support against buckling, when torque is applied to the helical gear: in this way, the presence of the slits 36, distributed uniformly on the base 5 of the tread, enables the width of the spaces between the flanks 4 to be slightly increased or reduced as they pass from the entrados to the extrados of the flexible helical gear on a curved path; due to the high flexibility of the flexible helical gear 33, for it to retain the desired curvature, it requires an internal core 38 to guide it, which is completely encased by the helical gear between the two rigid joints 37: the core does not come into physical contact with the cradles but is held in place by them due to the contact with the helical gear.

Operation of the continuous helical gear 43, with teeth external to the external diameter of the thread, occurs with the reciprocal engagement of the teeth 45, external to the thread, with teeth 47 of the cylindrical gear wheel 46 above it: the hook 52 being located between the threads and not interfering with the teeth of the cylindrical gear wheel, crosses toothed section 44 without encountering obstacles, continually supported on the base 5 and pushed along by flanks 4; the cylindrical gear wheel 46 is driven by a train of gear wheels 48, which can have different diameters and can be narrower; axial positioning is achieved by means of axial reference points 51 and the internal sides of the cradles 50 in the area of contact external to the thread but at the base of teeth 45, making the contact more continuous even with the passage of the spaces between the said teeth 45.

Operation of the continuous helical gear 53, with teeth within the height of the thread, occurs with the reciprocal engagement of teeth 55 with teeth 57 on the length of toothed helical gear 56 above it: the hook 52, being positioned between the threads and supported on the base 5, is pushed along the continuous helical gear by the flanks of teeth 55 and 57 combining and cooperating, due to the correlation of the two lengths 54, 56 of toothed helical gear. The axial positioning of helical gear 53 in cradle 60 is obtained with the self-centering of the two toothed lengths 54, 56 by means of lugs 58 facing, when engaged, corresponding notches 59 in the base of the spaces between the teeth 55: the support structure 61 of the length of toothed helical gear 56 and of the bevel gears 62 absorbs the axial reaction of the continuous helical gear 53.

In practice, the materials, dimensions and details of execution may be different from but technically equivalent to those described without departing from the juridical domain of the present invention. As such, the toothed sections 11, 43 or 53 of the hellcal gear can be made of a different material from the helical gear and rigidly fixed to it. Less advantageously, the helical gears and other components can be made of materials that have higher frictional resistance, but that can take higher loads, typically metallic materials and composite fibrous materials. Furthermore, cradles 6, 50 and 60, although less advantageously, can be substituted with rotating roller supports, even though they require more space and are more expensive. Also, the transmissions described, the train of gears 46, 48 or bevel gears 62, can be exchanged with one another or with the cog belt drive in as much as they are technically equivalent; this also as regards the axial positioning of the continuous helical gear, the lip 12, 13, the axial references 51 or the lugs 58 and notches 59 can be advantageously used, permitting the interchangeability of the transmissions of the supports with drive. Furthermore, but with reduced reliability, the lugs can be positioned in the spaces between teeth 55 of the length of toothed helical gear 54 and vice versa for the notches positioned on the teeth. Finally, the axial positioning of the helical gear can be achieved by means of ridges on the crest of the thread extending beyond the external diameter of the helical gear, which make contact with the external extremities of the cradle/s 6, 50 or 60.

## Claims

1. A continuous helical gear conveyor (1, 43, 53) for conveying and storing suspended objects with one flexible helical gear stretch at least, comprising a rotating helical gear that contains in the space between the thread and supports a hook (3) of the object being conveyed, and for flexible stretches two axially coupled helixes, the external one with a pitch sufficient to contain and push along the hook (3, 52) of the objects being conveyed and the internal one, wound in the opposite direction and with external diameter close to the internal diameter of the first one, that provides support for the said hook and resistance against compression for the external helix, characterised in that the flexible helical gear (33) is guided by an internal core (38) forming the curvature/s required in the individual applications: the said core is completely enclosed by the flexible helical gear, but is positioned in space by means of the contact of the flexible helical gear with its supports (21, 22).

2. A helical gear conveyor with one flexible stretch at least, as claimed in the preceding claim, characterised in that said flexible helical gear (33) is advantageously obtained with the provision of a helical groove (35), wound in the opposite direction to the external thread (4, 5) of the helical gear, cut to a diameter which is greater than the minor diameter (Dn) of the external thread in the tubular section included between the said minor diameter and the diameter of the internal hole (Df).

3. A helical gear conveyor with one flexible stretch at least, as claimed in one of the preceding claims, characterised in that said internal core (38), due to the sliding contact to the internal hole (Df ), is advantageously covered with a layer of low-friction material.

4. A helical gear conveyor with one flexible stretch at least, as claimed in one of preceding claims, characterised in that each stretch of helical gear (1, 43, 53) is connected to the adjoining stretch in a fixed manner (37) or so that it may be dismantled (32) by means of toothed end joints (18, 40).

5. A helical gear conveyor with one flexible stretch at least, as claimed in the preceding claim, characterised in that having, furthermore, rigid end joint (37) with a tooth (18) for each start and a helical contact surface (19) obtained on the centre line of the thread (4).

6. A helical gear conveyor with one flexible stretch at least, as claimed in the preceding claim, characterised in that having an end joint (32) that may be dismantled with a tooth (40) for each start and a helical contact surface obtained on the centre line of the base (5) of the thread.

7. A helical gear conveyor with one flexible stretch at least, as claimed in one of claims 1 or 2, characterised in that the said stretch of flexible helical gear (33) is connected at its ends to the continuous helical gear (1, 43, 53) with rigid joints (37) and in the proximity of its motorized supports.

8. A helical gear conveyor with one flexible stretch at least, as claimed in claim 2, characterised in that the flexible helical gear (33) has a pitch Pi of the helical groove (35) of between 1/100 and 2/3 of the pitch P of the external thread; a ratio between hole diameter Df and core diameter Dn of between 1/2 and 9/10.

9. A helical gear conveyor with one flexible stretch at least, as claimed in one of the preceding claims, characterised in that the axial positioning of the helical gear is achieved by means of curved lip (12) of the cradle, or support, coupled to the corresponding spline (13) of the thread (4) of the continuous helical gear (1, 43, 53).

10. A helical gear conveyor with one flexible stretch at least, as claimed in one of the preceding claims, characterised in that the axial positioning is achieved by means axial references (51) positioned between the thread (4) and teeth (45) making contact with the internal edges of cradle sections (50) or support.

11. A helical gear conveyor with one flexible stretch at least, as claimed in one of the preceding claims, characterised in that the axial positioning of the helical gear is achieved by means of the coupling of lugs (58) positioned on top of teeth (57) of the length of toothed helical gear (56) with corresponding notches (59) in the base of spaces (45) on the corresponding toothed length (54) of continuous helical gear (53).

12. A helical gear conveyor with one flexible stretch at least, as claimed in one of the preceding claims, characterised in that the axial positioning is achieved by means of ridges on the crest of the thread (4) extending beyond the external diameter (De) of the helical gear, which make contact with the external extremities of the cradle/s or support/s.

## Patentansprüche

1. Endlose Förderschnecke (1, 43, 53) zum Befördern und Lagern hängender Gegenstände mit mindestens einem flexiblen Schneckenabschnitt, umfassend eine rotierende Schnecke, die in dem Zwischenraum zwischen Gewinde und Träger einen Haken (3) des zu befördenden Gegenstandes aufnimmt, und für die flexiblen Abschnitte zwei axial gekoppelte Förderschnecken, wobei die äußere eine ausreichende Steigung besitzt, um den Haken (3, 52) des zu befördernden Gegenstandes aufzunehmen und weiterzuschieben, und die innere in der entgegengesetzten Richtung gewunden ist und einen Außendurchmesser besitzt, der nahe am Innendurchmesser der ersten liegt, die eine Halterung für den Haken und Widerstand gegen Druck für die äußere Förderschnecke zur Verfügung stellt, dadurch gekennzeichnet, daß die flexibie Schnecke (33) von einem Innenkern (38) geführt wird, der die für einzelne Anwendungen notwendige Biegung/en bildet: wobei der Kern von der flexiblen Schnecke vollständig umschlossen, jedoch mittels des Kontaktes der flexiblen Schnecke mit ihren Trägern (21, 22) im Abstand angeordnet ist.

2. Endlose Förderschnecke mit mindestens einem flexiblen Schneckenabschnitt gemäß dem vorhergehenden Anspruch, gekennzeichnet dadurch, daß die flexible Schnecke (33) vorteilhaft durch Vorsehen einer schneckenförmigen Nut (35) erhalten wird, die in der entgegengesetzten Richtung zum Außengewinde (4, 5) der Schnecke gewunden ist und auf einen Durchmesser geschnitten ist, der größer ist als der Kerndurchmesser (Dn) des Außengewindes in dem rohrförmigen Abschnitt und zwischen dem Kerndurchmesser und dem Durchmesser der Innenbohrung (Df) liegt.

3. Endlose Förderschnecke mit mindestens einem flexiblen Schneckenabschnitt gemäß einem der vorhergehenden Ansprüche, gekennzeichnet dadurch, daß der Innenkern (38) wegen des Gleitkontaktes mit der Innenbohrung (Df) vorteilhaft mit einer Schicht aus, reibungsarmen Material ummantelt ist.

4. Endlose Förderschnecke mit mindestens einem flexiblen Schneckenabschnitt gemäß einem der vorhergehenden Ansprüche, gekennzeichnet dadurch, daß jeder Abschnitt der Schnecke (1, 43, 53) mit dem benachbarten Abschnitt in einer festen Art und Weise (37) oder so verbunden ist, daß er mittels verzahnter Endverbindungen (18, 40) auseinandergebaut werden kann.

5. Endlose Förderschnecke mit mindestens einem flexiblen Schneckenabschnitt gemäß dem vorhergehenden Anspruch, gekennzeichnet dadurch, daß sie außerdem eine feste Endverbindung (37) mit einem Zahn (18) für jeden, Gang und einer schneckenförmigen Kontaktfläche (19) besitzt, die auf der Mittellinie des Gewindes (4) erhalten wird.

6. Endlose Förderschnecke mit mindestens einem flexiblen Schneckenabschnitt gemäß dem vorhergehenden Anspruch, gekennzeichnet dadurch, daß sie eine Endverbindung (32) besitzt, die auseinandergebaut werden kann, mit einem Zahn (40) für jeden Gang und einer schneckenförmigen Kontaktflache, die an der Mittellinie des Gewindebodens (5) erhalten wird,

7. Endlose Förderschnecke mit mindestens einem flexiblen Schneckenabschnitt gemäß einem der Ansprüche 1 oder 2, gekennzeichnet dadurch, daß der Abschnitt der flexiblen Schnecke (33) an seinen Enden mit der endlosen Schnecke (1, 43, 53) mit festen Verbindungen (37) und in der Nähe seiner motorisierten Träger verbunden ist.

8. Endlose Förderschnecke mit mindestens einem flexiblen Schneckenabschnitt gemäß Anspruch 2, dadurch gekennzeichnet, daß die schnekkenförmige Nut (35) der flexiblen Schnecke (33) eine Steigung Pi zwichen 1/100 und 2/3 der Steigung P des Außengewindes hat; und zwischen dem Bohrungsdurchmesser Df und dem Kerndurchmesser Dn ein Verhältnis zwischen 1/2 und 9/10 besteht;

9. Endlose Förderschnecke mit mindestens einem flexiblen Schneckenabschnitt gemaß einem der vorhergehenden Ansprüche, gekennzeichnet dadurch, daß das axiale Positionieren der Schnecke mittels einer gebogenen Lippe (12) des Gestells oder Trägers erreicht wird, die mit der entsprechenden Paßfeder (13) des Gewindes (4) der endlosen Schnecke (1, 43, 53) verbunden ist.

10. Endlose Förderschnecke mit mindestens einem flexiblen Schneckenabschnitt gemäß einem der vorhergehenden Ansprüche, gekennzeichnet dadurch, daß das axiale Positionieren mit Hilfe axialer Bezugspunkte (51) erreicht wird, die zwischen dem Gewinde (4) und Zähnen (45) liegen, die Kontakt mit den Innenkanten der Gestellabschnitte (50) oder Träger herstellen.

11. Endlose Förderschnecke mit mindestens einem flexiblen Schneckenabschnitt gemäß einem der vorhergehenden Ansprüche, gekennzeichnet dadurch, daß das axiale Positionieren der Schnecke mittels Verbinden von auf der Oberseite der Zähne (57) über die Länge der verzahnten Schnecke (56) angeordneten Nasen (58) mit entsprechenden Einkerbungen (59) im Boden der Abstände (45) auf der entsprechenden verzahnten Länge (54) der endlosen Schnecke (53) erreicht wird.

12. Endlose Förderschnecke mit mindestens einem flexiblen Schneckenabschnitt gemäß einem der vorhergehenden Ansprüche, gekennzeichnet dadurch, daß das axiale Positionieren mittels Rippen auf der Gewindespitze (4) erreicht wird, die sich über den Außendurchmesser (De) der Schnecke hinaus erstrecken und Kontakt zu den Außenrändern des Gestells/der Gestelle oder Träger/s herstellen.

## Revendications

1. Transporteur à vis hélicoïdale (1, 43, 53) pour le transport et le stokage de confection suspendue, qui présente au moins un tronçon de vis flexible, comprenant une vis hélicoïdale pivotante, laquelle, dans l'espace entre le filet et les supports, contient et soutient un crochet (3) de l'objet transporté et dans les tronçons flexibles deux hélices axialement accouplés, dont l'extérieure a un pas suffisant pour contenir et pousser le crochet (3, 52) des objets transportés le long d'elle et dont l' intérieure, enroulée dans la direction opposée et avec un diamètre extérieur proche du diamètre intérieur de la première hélice, soutient le crochet susdit et supporte la compression sur l'hélice extérieure, caractérisé en ce que, la vis flexible hélicoïdale (33) est guidée par une âme intérieure qui forme le(s) courboure (s) exigé (s dans ces applicages spécifiques: l'âme susdite est complètement enroulée par la vis flexible hélicoïdale, mais elle est mise en place par le contact de la vis flexible hélicoïdale avec ses supports (21, 22).

2. Transporteur à vis hélicoïdale qui présente au moins un tronçon flexible, suivant la revendication précédente, caractérisé en ce que, ladite vis flexible hélicoïdale (33) est avantageusement obtenue par la réalisation d'un cran hélicoïdal (35) enroulé dans la direction opposée au filet extérieur (4, 5) de la vis hélicoïdale, coupé à un diamètre plus grand que le diamètre mineur (Dn) du filet extérieur dans la section tubulaire comprise entre ledit diamètre et le diamètre du trou intérieur (Df).

3. Transporteur à vis hélicoïdale qui présente au moins un tronçon flexible, suivant l'une des revendications précédentes, caractérisé en ce que, ladite âme intérieure (38), à la suite du contact frottant sur le trou intérieur (Df ), est avantageusement recouverte d'une couche de matériel à bas-frottement.

4. Transporteur à vis hélicoïdale, qui présente au moins un tronçon flexible, suivant l'une des revendications précédentes, caractérisé en ce que, chacun troncon de vis hélicoïdale (1, 43, 53) est uni au tronçon contigu de façon fixe (37), ou bien il peut être démonté par des joints dentés d'extrémité (18, 40).

5. Transporteur à vis hélicoïdale qui présente au moins un troncon flexible, suivant l'une des revendications précédentes, caractérisé en ce que, il présente, en plus, un joint rigide d'extrémité (37) avec un cran (18) pour chacun début et une superficie de contact hélicoïdale (19) obtenue sur la ligne médiane du filet (4) .

6. Transporteur à vis hélicoïdale qui présente au moins un tronçon flexible, suivant l'une des revendications précédentes, caractérisé en ce que, il présente soit un joint d'extrémité (32) qui peut être démonté par un cran (40) pour chacun début, soit une supérficie de contact hélicoïdale obtenue sur la ligne médiane de la base (5) du filet.

7. Transporteur à vis hélicoïdale qui présente au moins un tronçon flexible, suivant les revendications 1 ou 2, caractérisé en ce que, ledit tronçon de vis flexible hélicoïdale (33) est connecté, à ses extrémités, à la vis continue hélicoïdale (1, 43, 53) par des joints rigides (37) et en proximité de ses supports motorisés.

8. Transporteur à vis hélicoïdale qui présente au moins un tronçon flexible, suivant la revendication 2, caractérisé en ce que, la vis flexible hélicoïdale (33) présente un pas Pi du trou hélicoïdale (35) compris entre 1/100 et 2/3 du pas P du filet extérieur; un rapport entre le diamètre du trou Df et le diamètre de l'âme Dn compris entre 1/2 et 9/10.

9. Transporteur à vis hélicoïdale qui présente au moins un tronçon flexible, suivant l'une des revendications précédentes, caractérisé en ce que, la mise en place axiale de la vis hélicoïdale est obtenue par des moyens à lèvre courbe (12) du berceau, ou support, couplé à la cannelure (13) du filet (4) de la vis continue hélicoïdale (1, 43, 53).

10. Transporteur à vis hélicoïdale qui présente au moins un tronçon flexible, suivant l'une des revendications précédentes, caractérisé en ce que, la mise en place axiale est obtenue par des moyens de référence axiaux (51) placés entre le filet (4) et les dents (45) en contact avec les bords intérieurs des sections du berceau (50) ou support.

11. Transporteur à vis hélicoïdale qui présente au moins un tronçon flexible, suivant l'une des revendications précédentes, caractérisé en ce que, la mise en place axiale de la vis hélicoïdale est obtenue par des moyens d'accouplement d' aubes (58) placées en haut des dents (57) d'un tronçon denté de la vis hélicoïdale (56) avec les encoches correspondants (59) placés à la base des crans sur le tronçon denté (54) correspondant de la vis continue hélicoïdale (53) .

12. Transporteur à vis hélicoïdale qui présente au moins un tronçon flexible, suivant l'une des revendications précédentes, caractérisè en ce que, la mise en place axiale est obtenue à travers des crêtes situées en haut du filet (4) et qui dépassent le diamètre extérieur (De) de la vis hélicoïdale, pour entrer en contact avec l'extrémité extérieure de(s) berceau(x) ou support(s).
